(19) Europäisches Patentamt
European Patent Office
Office européen des brevets

(11) Publication number: **0 333 861**
**A1**

(12) # EUROPEAN PATENT APPLICATION

published in accordance with Art. 158(3) EPC

(21) Application number: **87907990.3**

(51) Int.Cl.$^3$: **G 01 N 27/30**

(22) Date of filing: **08.12.87**

Data of the international application taken as a basis:

(86) International application number:
**PCT/JP87/00951**

(87) International publication number:
**WO88/04424 (16.06.88 88/13)**

(30) Priority: **08.12.86 JP 290492/86**

(43) Date of publication of application:
**27.09.89 Bulletin 89/39**

(84) Designated Contracting States:
**DE FR GB IT NL SE**

(71) Applicant: **Terumo Kabushiki Kaisha**
**No. 44-1, Hatagaya 2-chome Shibuya-ku**
**Tokyo 151(JP)**

(72) Inventor: **SHIMOMURA, Takeshi Terumo Kabushiki Kaisha**
**2656-1, Ohbuchi, Fuji-shi**
**Shizuoka-ken 417(JP)**

(72) Inventor: **YAMAGUCHI, Shuichiro Terumo Kabushiki Kaisha**
**2656-1, Ohbuchi, Fuji-shi**
**Shizuoka-ken 417(JP)**

(72) Inventor: **OYAMA, Noboru**
**5-24, Shinmachi 3-chome Fuchu-shi**
**Tokyo 183(JP)**

(74) Representative: **Joly, Jean-Jacques et al,**
**CABINET BEAU DE LOMENIE 55, rue d'Amsterdam**
**F-75008 Paris(FR)**

(54) **ION-SELECTIVE FET SENSOR.**

(57) An ion-selective FET sensor is obtained by covering the surface of a gate insulating film (14) of MOSFET with a conductor layer (15) composed of a layer of conductive carbon, a metal oxide such as iridium oxide or indium oxide, or a metal such as platinum, silver of palladium, covering the resulting surface with an oxidizing/reducing layer (16) and further covering the surface with an ion-selective layer. The obtained ion-selective FET sensor shows a high response speed, is scarcely affected by light, and is quite stable for a long time.

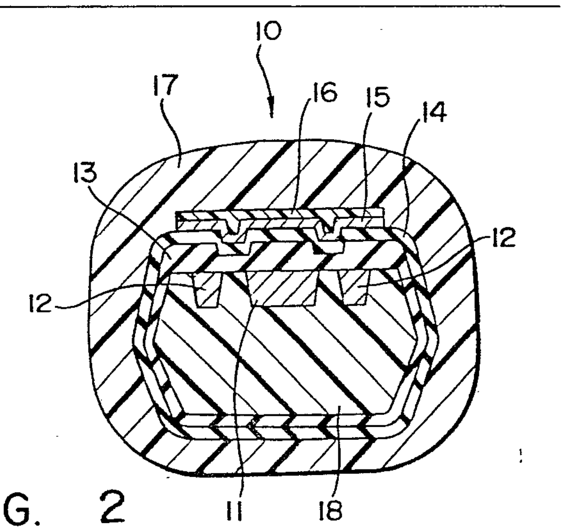


F I G. 2

EP 0 333 861 A1

Croydon Printing Company Ltd.

DESCRIPTION

# ION-SELECTIVE FET SENSOR

## TECHNICAL FIELD

This invention relates to an ion-selective FET sensor and, more particularly, to an ion-selective FET (hereinafter referred to as an "ISFET") sensor for measuring the ion concentration of a solution by the potentiometric response of an electrode.

## BACKGROUND ART

Many ISFET sensors which utilize a MOSFET are known in the art, but all ion-selective FET sensors generally share a common drawback, namely a large potential drift.

It is known (Japanese Patent Application Laid-Open No. 59-164952) that potential drift can be reduced by adopting a structure in which a polymeric layer devoid of an ion-responsive substance is interposed between a gate isolating layer and an ion-selective layer for the purpose of improving the adhesion between these two layers. However, as a result of the poor electronic conductivity of the intervening polymeric layer, an ion sensor having such a structure exhibits a high membrane

impedence and is susceptible to noise and other disturbances when a measurement is made.

It is known (Japanese Patent Application Laid-Open Nos. 57-63444, 60-73351) that a highly durable ion sensor having an ion-selective layer of improved adherability is obtained by adopting a structure in which a metallic layer is interposed between the gate isolating layer and the ion-selective layer. However, the problem with such an expedient is stability since the gate portion of the sensor is readily influenced by oxygen.

Accordingly, there is demand for an ISFET sensor having good adhesion between the ion-selective layer and the gate isolating layer, outstanding durability and excellent stability with little susceptibility to the effects of interfering ions.

DISCLOSURE OF THE INVENTION

The inventor has performed exhaustive research in an effort to solve the aforementioned problems. As a result of this research, the inventor has found that an ISFET sensor having higher durability and stability and exhibiting outstanding sensor characteristics can be obtained if an electrical conductor layer is provided on the surface of a gate isolating layer and a redox layer having a redox function is deposited on the electrical conductor layer without directly depositing an ion-selective layer on the electrical conductor layer. The invention has been perfected on the basis of this discovery.

The ISFET sensor of the present invention comprises a MOSFET, an electrical conductor layer deposited on the surface of a gate isolating layer of the MOSFET, a redox layer having a redox function deposited on the surface of the electrical conductor layer, and an ion-selective layer exhibiting ion selectivity deposited on the surface of the redox layer.

In this arrangement, a redox layer having a redox function is inserted between the gate isolating layer of a MOSFET and an ion-selective layer responsive to a predetermined ion, thereby improving durability and stability so that the sensor exhibits excellent sensor characteristics. Furthermore, adhesion and durability are improved by inserting the electrical conductor layer between the gate isolating layer and the redox layer.

The ISFET sensor of the present invention has the electrical conductor layer provided on the surface of the MOSFET gate isolating layer, and the ion-selective layer is deposited on the electrical conductor layer through the intermediary of the redox layer. Accordingly, the layers exhibit good adhesion and durability. In addition since the sensor is not readily influenced by light, potential drift is very slight and stability is outstanding.

Since the MOSFET has a high input impedence, the ISFET sensor of the invention operates stably even if the applied ion-selective layer has a high resistivity. Since the amplifying action thereof can be utilized, the

sensor has a quick response despite is small size. The sensor therefore has practical advantages.

BRIEF DESCRIPTION OF THE DRAWINGS

Fig. 1 is a schematic view of an ISFET sensor for pH measurement fabricated in accordance with Example 1;

Fig. 2 is a sectional view taken along line A-A of a gate portion in the ISFET sensor of Fig. 1;

Fig. 3 is a sectional view of a gate portion of an ISFET sensor for pH measurement fabricated in accordance with Examples 2 and 12;

Fig. 4 is a schematic view of an ISFET sensor for pH measurement fabricated in accordance with Examples 3 and 13;

Fig. 5 is a schematic sectional view taken along line C-C of the ISFET sensor shown in Fig. 14;

Fig. 6 is a schematic explanatory view illustrating a cell for measuring ion concentration by means of the ISFET sensor of the embodiment, as well as a circuit for measuring source voltage (Vout) with respect to a reference electrode;

Figs. 7 and 8 are views showing how Vout and the slope S of a Nernst plot of the ISFET sensor of the embodiment and of a comparative sensor change with the passage of time;

Fig. 9 is a view illustrating the results of an Experiment 11 using an ISFET sensor for pH measurment fabricated in accordance with Example 11; and

Fig. 10 is a view illustrating the results of an Experiment 13 using an ISFET sensor for potassium ion

measurement fabricated in accordance with Example 14.

## BEST MODE FOR CARRYING OUT THE INVENTION

The MOSFET employed in the present invention is of the type used in ISFETs well-known in the art. If the gate isolating layer (hereinafter also referred to as a gate isolating membrane where appropriate) thereof can be utilized, any MOSFET may be adopted [Matsuo and Esashi, Electrochemistry and Industrial Physics, 50, 64 (1982)]. An example which can be mentioned is one in which a FET having an Si-$SiO_2$ gate isolating layer is formed on a silicon or sapphire substrate. An isolated gate-type MOSFET is also well-suited for use. The MOSFET using the silicon substrate is comparatively low in cost and suited for general-purpose use. The MOSFET employing the sapphire substrate is readily insulated, lends itself well to miniaturization and excels functionally.

The MOSFET can be fabricated by utilizing conventional planar or ion injection techniques. To form the electrically conductive layer on the gate isolating layer of the MOSFET thus fabricated, an electrical conductor is deposited on the surface of the gate isolating layer by an evaporation process, sputtering process, ion plating process, CVD process, ion beam sputtering process, etc. The membrane thickness is that which is substantially impermeable to light, e.g. preferably more than 100 A. As the electrical conductor, platinum, silver, palladium, iridium oxide, indium oxide, electrically conductive carbon having a graphite-type crystal structure and electrically conductive carbon

having an amorphous crystal structure are preferred. Though electrically conductive carbon having the graphite-type crystal structure is most preferred, compounds may be used without particular limitation so long as there is good adhesion with respect to the gate isolating layer and redox layer. In addition, the electrical conductor layer is not limited to a single layer but can have a multilayer structure. If the mulilayer structure is adopted, excellent results are obtained by coating the gate isolating layer with a thin film of a metal such as Ni or Cr, and providing another electrical conductor layer on this thin film.

The redox layer deposited on the surface of the electrical conductor layer refers to one in which an electrode comprising an electrically conductive substrate having this layer deposited on its surface is capable of generating a constant potential on the electrically conductive substrate owing to a reversible redox reaction. In the present invention, an especially preferred redox layer is one which will not allow the potential to fluctuate due to the partial pressure of oxygen gas. Particularly suitable examples of the redox layer are (1) an organic compound membrane or a polymeric membrane capable of a quinone-hydroquinone type redox reaction, (2) an organic compound membrane or polymeric membrane capable of an amine-quinoid type redox reaction, and (3) an electrically conductive substance such as poly(pyrrole), poly(chenilene). The quinone-hydroquinone type redox reaction is expressed by e.g. the following

reaction formula, taking a polymer as an example:

$$\underset{\substack{\| \\ O}}{\overset{\substack{O \\ \|}}{(R_1)}}{}_{m_1} \xrightleftharpoons{+H^+ \cdot +e^-} \underset{\substack{| \\ OH}}{\overset{\substack{OH \\ |}}{(R_2)}}{}_{m_1}$$

where $R_1$, $R_2$ represent e.g. compounds having a structure containing an aromatic series.

The amine-quinoid type redox reaction is expressed by e.g. the following reaction formula, taking a polymer as an example:

$$(N = R_3)_{n_1} - N - \xrightleftharpoons{+H^+ \cdot +e^-} (NH - R_4)_{n_1} - NH-$$

where $R_3$, $R_4$ represent e.g. compounds having a structure containing an aromatic series.

The following compounds (a) - (d) can be mentioned as compounds capable of forming the redox layer having such a redox function:

(a) A hydroxy aromatic compound expressed by

$$\overset{(OH)_{m_2}}{\overset{|}{Ar_1}} - (R_5)n_2$$

where $Ar_1$ represents an aromatic nucleus, $R_5$ a substituent group, $m_2$ is 1 or the effective valence of $Ar_1$, and $n_2$ is 0 or the effective valence of $Ar_1$ minus 1.

The aromatic nucleus of $Ar_1$ may be a single ring such as a benzene nucleus, a multiple ring such as an anthracene nucleus, pyrene nucleus, chrysene nucleus, perylene nucleus or coronene nucleus, or a heterocyclic ring. Examples of the substituent group $R_5$ are alkyl groups such as a methyl group, aryl groups such as a phenyl group, and a halogen

atom. More specifically, examples are dimethyl phenol, phenol, hydroxy pyridine, o- and m-benzyl alcohols, o-, m- and p-hydroxybenzaldehydes, o- and m-hydroxy-acetophenones, o-, m- and p-hydroxypropiophenons, o-, m- and p-hydroxybenzophenones, o-, m- and p-carboxyphenols, diphenylphenol, 2-methyl-8-hydroxy-quinoline, 5-hydroxy-1, 4-napthoquinone, 4-(p-hydroxyphenyl)2-butanone, 1, 5-dihydroxy-1, 2, 3, 4-tetrahydronaphthalene, bisphenol-A, salicylanilide, 5- and 8-hydroquinolines, 1,8-dihydroxyanthraquinone, and 5-hydroxy-1,4-naphthoquinone.

(b) An amino aromatic compound expressed by the formula

$$\begin{array}{l}(NH_2)_{m_3}\\ \;| \\ Ar_2-(R_6)_{n_3}\end{array}$$

where $Ar_2$ represents an aromatic nucleus, $R_6$ a substituent group, $m_3$ is 1 or the effective valence of $Ar_2$, and $n_3$ is 0 or the effective valence of $Ar_2$ minus 2.

As for the aromatic nucleus $Ar_2$ and the substituent group $R_6$, items similar to $Ar_1$ and the substitution group $R_5$ in compound (a) can be used. Specific examples of the amino aromatic compound are aniline, 1,2-diaminobenzene, aminopyrene, diaminopyrene, aminochrysene, diamino-chrysene, 1-aminonaphtholene, 9-aminonaphtholene, 9, 10-diaminonaphtholene, 1-aminoanthraquinone, p-phenoxyaniline, o-phenylenediamine, p-chloroaniline, 3,5-dichloroaniline, 2,4,6-trichloroaniline, N-methylaniline, and N-phenyl-p-phenylenediamine.

(c) A quinone such as 1,6-pyrenequinone, 1,2,5,8-tetrahydroxynalizaline, phenantolinequinone, 1-amino-anthraquinone, purpurine, 1-amino-4-hydroxyanthraquinone, and anthralphyne.

Among these compounds, 2,6-xylenol and 1-aminopyrene are especially preferred.

(d) Pyrrole and derivatives thereof (e.g. N-methyl pyrrole), and thiophene and derivatives thereof (e.g. methyl thiophene).

Further, examples of compounds capable of forming the layer having the redox function are those which undergo a redox reaction. The following can be mentioned: poly(N-methyl aniline) [Onuki, Matsuda, Koyama, Nihon Kagakukaishi, 1801 - 1809 (1984)], poly(2k6-dimethyl-1,4-phene ether), poly(o-phenylediamine), poly(phenol) and polyxylenol; organic compounds containing the compounds (a) through (c) such as pyrazoronequinone group-containing vinyl compound-polymers, isoaroxythazine group-containing vinyl compound-polymers and other quinone group-containing compound-polymers, lower polymeric compounds (oligomers) of compounds (a) through (c), or substances obtained by fixing the compounds of (a) through (c) to polymeric compounds such as polyvinyl compounds and polyamide compounds. In the present specification, the term "polymer" is taken to mean both homopolymers and mutual polymers such as copolymers.

In the present invention, in order to deposit the compound capable of forming the redox layer, a polymer

obtained by synthesizing an amino aromatic compound, a hydroxy aromatic compound or the like on an electrically conductive substrate of electrically conductive carbon or a precious metal by an electrolytic oxidation polymerization method or electro-deposition method, or a polymer synthesized by application of electron beam irradiation, light or heat, is dissolved in a solvent. The resulting solution is deposited on the surface of an electrical conductor layer by painting or dipping, reacted in the gas phase in vacuo and deposited directly on the FET gate isolating membrane, or deposited directly on the surface of the electrical conductor layer by the electrolytic oxidative polymerization method or by being irradiated with light, heat or radiation. The preferred method among these is direct deposition by electrolytic oxidative polymerization.

The electrolytic oxidative polymerization method is implemented by subjecting the amino aromatic compound or hydroxy aromatic compound to electrolytic oxidation polymerization in a solvent in the presence of a suitable supporting electrolyte and depositing a membrane of the polymer on the surface of the electrical conductor layer. Preferred examples of the solvent are acetonitrile, water, dimethyl formamide, dimethyl sulfoxide, propylene carbonate and the like. Preferred examples of the supporting electrolyte are sodium perchlorate, sulfuric acid, sodium sulfate, phosphoric acid, boracic acid, tetrofluoro-potassium phosphate, quaternary ammonium_

salts and the like.

The membrane thickness of the redox layer is 0.01 um - 0.5 mm, preferably 0.1 - 10 um. A membrane thickness of less than 0.01 um does not fully bring forth the effects of the invention, while a thickness of more than 0.5 mm is undesirable from the viewpoint of miniaturizing the sensor.

The redox layer used in the present embodiment can be used in a form impregnated with an electrolyte. Examples of the electrolyte are phosphoric acid, dipotassium hydrogen phosphate, sodium perchlorate, sulfuric acid, tetrafluoro borate, tetraphenyl borate and the like. In order to impregnate the redox layer with the electrolyte, a simple method which can be adopted is to deposit the redox layer on the surface of the electrical conductor layer and then dip the result into a solution of the electrolyte.

Thus, the surface of the redox layer coating the electrical conductor layer is itself coated with an ion-selective layer. As the ion-selective layer, use can be made of a layer (a neutral carrier layer) in which an ion carrier material selective to the ion of interest and, if necessary, an electrolytic salt, are carried on a polymeric compound. The following are examples of the ion carrier material which can be used, depending upon the ion of interest:

(i) For potassium ion

Examples of which can be mentioned are valinomycin,

nonactin, monactin, crown ether compounds such as dicyclohexyl-18-crown-6, naphtho-15-crown-5, bis(15-crown-5) and the like. Among these, valinomycin and bis(15-crown-5) are ideal.

(ii) For sodium ion

Examples which can be mentioned are aromatic amides or diamides, aliphatic amides or diamides, and crown compounds, e.g. bis[12-crown-4)methyl] dodecylmalonate, N,N,N,N-tetrapropyl-3,6-dioxanate diamide, N,N,N',N'-tetra-benzyl-1,2-ethenedioxy diacetoamide, N,N'-dibenzyl-N,N'-diphenyl-1,2-phenyldiacetoamide, N,N',N"-triheptyl-N,N'N"-trimethyl-4,4',4"-propylpyridine tris(3-oxythabutylamide), 3-methyoxy-N,N,N,N-tetrapropyl--1,2-phenylene dioxydiacetoamide, (-)-(R,R)-4,5-dimethyl-N,N,N,N-tetrapropyl-3,6-dioxaoctanediamide, 4-methyl-N,N,N,N-tetrapropyl-3-6-dioxaoctane diamide, N,N,N,N-tetrapropyl-1,2-phenylenedioxydiacetoamide, N,N,N,N-tetrapropyl-2,3-naphthanedioxydiacetoamide, 4-t-butyl-N,N,N,N-tetrapropyl-1,2-dichlorohexanedioxy-diacetoamide, cis-N,N,N,N-tetrapropyl-1,2-cyclohexane-dioxydiacetoamide, and trans-N,N,N,N-tetrapropyl-1,2-cyclohexanedioxydiacetoamide. Among these, bis[(12-crown-4) methyl] dodecylmalonate is well-suited for use.

(iii) For chlorine ion

Examples which can be mentioned are quaternary ammonium salts expressed by the formula

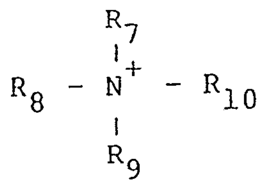

(where $R_7$, $R_8$, $R_9$ represent the same or different alkyl groups having a carbon number of 8 - 18, and $R_{10}$ represents hydrogen or an alkyl group having a carbon number of 1 - 8, and a triphenyl tin chloride expressed by the formula

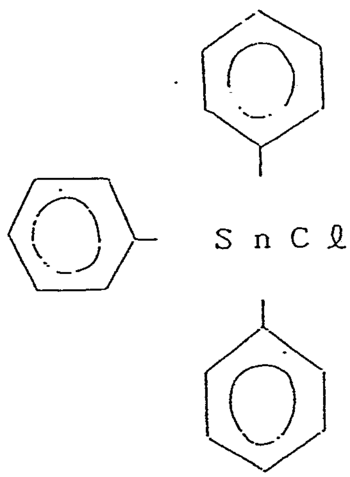

(iv) For calcium ion

Suitable examples are bis[di-(octylphenyl) phosphate], (-)-(R,R)-N,N'-bis[11-ethoxy carbonyl) undecyl]-N,N',4,5-tetramethyl-3,6-dioxaoctane-diamide and calcium bis[di(n-decyl) phosphate].

(v) For carbonate ion

Examples which can be mentioned are a quaternary ammonium salts expressed by the formula

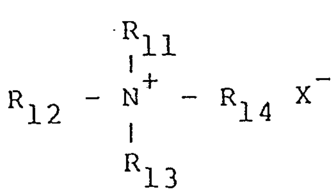

(where $R_{11}$, $R_{12}$, $R_{13}$ represent the same or different alkyl groups having a carbon number of 8 - 18, $R_{14}$

represents hydrogen atom or an alkyl group having a carbon number of 1 - 4, and $X^-$ represents $Cl^-$, $Br^-$ or $OH^-$), tertiary amine compounds expressed by the formula

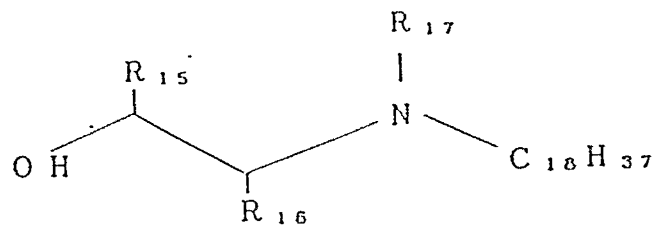

(where $R_{15}$ represents a phenyl group, hydrogen atom or a methyl group, $R_{16}$ represents hydrogen atom or a methyl group, and $R_{17}$ represents a methyl group or an octadecyl group), and a compound expressed by the formula

$$HO(CH_2)_3 - \underset{\underset{H}{|}}{N} (CH_2)_{17}CH_3$$

$$CH_3(CH_2)_{17} - \underset{\underset{CH_3}{|}}{N} (CH_2)_2 \underset{\underset{CH_3}{|}}{N} (CH_2)_{17}CH_3$$

Examples of the electrolytic salt are sodium tetrakis(p-chlorophenyl) borate, potassium tetrakis(p-chlorophenyl) borate, and a compound expressed by the formula

$$(R_{18})NBF_4$$

where $R_{18}$ represents an alkyl group, preferably an alkyl group having a carbon number of 2 - 6.

Examples of the polymer compound are organic polymer compounds such as vinyl chloride resin, vinyl chloride - ethylene copolymer, polyester, polyacryl amide and polyurethane, and inorganic polymer compounds such as silicone resin. Compounds are used in which the

plasticizer does not readily elute. Examples of such a plasticizer are dioctyl sebacate ester, dioctyl adipate ester, dioctyl maleate ester and di-n-octyl phenylphosphonate.

In order to coat the surface of the redox layer on the MOSFET gate isolating membrane with the ion-selective layer having the foregoing composition, 50 - 100 parts by weight of the plasticizer, 0.1 - 50 parts by weight of the ion carrier material (both with respect to 100 parts by weight of the polymer compound serving as the carrier) and the electrolytic salt are dissolved in a solvent (e.g. tetrahydrofuran). The resulting solution is placed on the gate isolating membrane to a thickness of 0.1 um - 10 mm and is then dried at room temperature or under heating. Alternatively, the gate isolating membrane is dipped into the solution followed by drying in a similar manner. It is desired that the thickness of the applied ion-selective layer be 1 um - 1 mm.

Example 1

An ISFET sensor for pH measurement was fabricated by forming an electrically conductive carbon membrane on the the surface of the gate isolating layer of a MOSFET, forming a redox membrane on the carbon membrane, and forming a hydrogen ion-selective layer on the redox membrane. The method of fabrication will now be described. Figs. 1 and 2 are schematic views of the sensor. Fig. 2 is a sectional view taken along line A-A' of Fig. 1.

(1) MOSFET

To fabricate the MOSFET, use was made of a FET (a so-called isolated-type FET) formed by laminating a p-type silicon wafer with a p-type Si-$SiO_2$ gate isolating membrane. A MOSFET of this type is fabricated on the p-type silicon wafer by utilizing an ordinary planar technique which relies upon photolithograpy, and a sputtering method is used to form the coating of the insulating membrane 14 comprising silicon nitride.

(2) Electrical conductor layer

Through use of an ion beam sputtering method, an electrically conductive carbon membrane (thickness: 2000 A) was formed as an electrical conductor layer 15 on the surface of the gate isolating membrane 14 of the MOSFET fabricated in the manner set forth above.

(3) Redox layer

Next, electrical contact was made with one end of the carbon membrane 15 by means of a metal contactor and the redox membrane 16 was deposited by carrying out electrolytic oxidation under conditions described below in an electrolyte having the composition given hereunder. In performing electrolysis, a platinum mesh was used as the counter electrode, and a saturated sodium chloride saturated calomel electrode (SSCE) was used as the reference electrode.

(Electrolyte)

0.5 M 2,6-dimethyl phenol

0.2 M $NaClO_4$

solvent: acetonitrile

(Electrolytic conditions)

After the electrolytic potential was swept three times from 0V to 1.5 V vs. SSCE (scan rate: 50 mV/sec), constant potential electrolysis (-20$^{o}$C) was performed at 1.5 V for 10 min.

Thus, a polymeric membrane (thickness: about 1 um) capable of a quinone-hydroquinone type redox reaction was formed as the redox layer.

(4) Hydrogen ion-selective layer

The electrode coated with the redox layer 16 was itself coated with a hydrogen ion-selective membrane (thickness: 0.4 mm) by being painted with a hydrogen ion carrier composition of the following composition, which was then allowed to dry:

(Hydrogen ion carrier composition)

| | |
|---|---|
| Tridodecyl amine | 2.0 mg/ml |
| potassium tetrakis(p-chlorophenyl) borate ($KT_pClPB$, Dojindo Laboratories) | 1.2 mg/ml |
| polyvinyl chloride (PVC, mean degree of polymerization $P_n$=1050) | 65.6 mg/ml |
| di(2-ethyl hexyl) sebacate (DOS) | 131.2 mg/ml |

solvent: tetrahydrofuran (THF)

Example 2

A pH measuring ISFET was fabricated as in Example 1 except for the fact that a sapphire substrate was used as the substrate of the MOSFET. A schematic sectional view of the gate portion is illustrated in Fig. 3.

Example 3

A pH measuring ISFET was fabricated as in Example 1 except for the fact that a so-called isolated gate-type MOSFET having a structure shown in Figs. 4 and 5 was used as the substrate of the MOSFET.

Example 4

An ISFET sensor for measuring potassium ion concentration was fabricated as in Example 1 except for the fact that a potassium ion carrier composition, described below, was used instead of the hydrogen ion carrier composition in Example 1 and the redox layer was coated with a potassium ion-selective layer (thickness: 0.4 mm)

(Potassium ion carrier composition)

| | |
|---|---|
| valinomycin | 3.2 mg/ml |
| PVC | 65.6 mg/ml |
| DOS | 131.2 mg/ml |
| solvent: THF | |

Experiment 1

The characteristics of the pH measuring ISFET sensor fabricated in Example 1 were investigated by measuring the sensor source voltage (Vout) with respect to SSCE using the measurement circuit and apparatus shown in Fig. 6. For the measurement of Vout, a digital voltmeter (TR6841, Advantest Corporation) was used. In addition, a 50 mM phosphate buffer solution was used as the liquid specimen. Measurement was taken over a pH range of 5 - 9 (37$^{\circ}$C) in the atmosphere and under constant illumination while the liquid specimen was stirred.

The response characteristic with respect to pH exhibited a linear relationship in accordance with a Nernst equation expressed by $E=E^{O}-S$ pH (where E stands for electromotive force, $E^{O}$ for constant potential and S for slope). It was found that S = 61 mV/pH (37°C), and a value close to the theoretical value was obtained. Also, it was clarified that 99% response was within 5 sec, which is a very rapid response, that Vout is constant within an experimental error of ±1 mV, even when the degree of illumination was varied over a range of from 0 to 10,000 lux, and that the sensor is little influenced by light.

Further, the stability of this pH sensor with the passage of time was investigated by repeating the above-described measurement over a period of 40 days. The results are as shown in Figs. 7 and 8. The comparative article used was a sensor obtained by depositing a hydrogen ion carrier membrane directly on a gate isolating layer.

As shown in Figs. 7 and 8, the sensor of the present embodiment does not exhibit any change in sensor characteristics over a period of more than one month. By contrast, the comparative article shows very little stability.

Experiment 2

The ISFETs obtained in Examples 2 and 3 were submitted to measurements similar to those performed in Experiment 1. The results were similar to those obtained

in Experiment 1.

Experiment 3

The response characteristics of the ISFET for potassium ion concentration measurement obtained in Example 4 were investigated in the manner set forth in Experiment 1.

The logarithmic value of Vout and potassium ion concentration exhibited good linearity in the range $10^{-4} - 5 \times 10^{-1}$ M, and the slope of the straight line was 60 mV/log[$k^+$]. It was found that the speed of response was very high, being within one second at a response of 95%, that there was very little change with a change in degree of illumination, and that characteristics were stable for over one month.

Examples 5 - 10

Ionic concentration measuring ISFETs shown in Table 1 were fabricated as in Example 1 except for the fact that ion carrier compositions indicated in Table 1 were used instead of the hydrogen ion carrier composition in Example 1 and the redox layer was coated with an ion-selective layer (thickness 0.3 mm).

TABLE 1

| Example | Ion Specimen | Ion Carrier Composition* | | | |
|---|---|---|---|---|---|
| | | Carrier Material** (content) | $KT_pClPB$ | PVC | DOS |
| 5 | $NH_4^+$ | nonactin 6.25 mg/ml (contains monactin at 25%) | 1.25mg/ml | 80.8mg/ml | 161.8mg/ml |
| 6 | $Na^+$ | Bis-12-Crown-4 5.0 | 1.1 | 65.0 | 129 |
| 7 | $Cl^-$ | TPSnCL 11.2 | - | 63.0 | 125.8 |
| 8 | $HCO_3^-$ | TDDA-Cl 6.6 | - | 64.6 | 128.8 |
| 9 | $Ca^{2+}$ | $Ca(DOPO)_2$ 14.0<br>DOPO 62.0 | - | 62.0 | 62.0 |
| 10 | $Mg^{2+}$ | DHDMBA 6.25 | 1.25 | 80.5 | 160 |

*All solvents are THF.

**The actual names of the carrier materials, abbreviated in the above table, are given on the following page.

bis-12-crown-4: bis[(12-crown-4) methyl] dodecyl malonate (manufactured by Dojindo Laboratories)

TPSnCl: triphenyl tin chloride (manufactured by Aldrich)

TDDa-Cl: tridodecyl ammonium chloride

$Ca(DOPO)_2$: calcium bis[di-(n-octyl phenyl) phosphate] (manufactured by Dojindo Laboratories)

DOPO: di(n-octyl phenyl)phosphate (Dojindo Laboratories)

DHDMBA: N,N'-diheptyl-N,N'-dimethyl-1,4-butane diamide (manufactured by FluKa)

Example 11

A pH measuring ISFET was fabricated as in Example 1 except for the fact that an electrically conductive iridium film (thickness: 2000 A) was formed instead of the electrically conductive carbon film as the electrically conductive layer 15.

Example 12

A pH measuring ISFET was fabricated as in Example 11 except for the fact that a sapphire substrate was used as the substrate of the MOSFET. A schematic sectional view of the gate portion is illustrated in Fig. 5.

Example 13

A pH measuring ISFET was fabricated as in Example 11 except for the fact that a so-called isolated gate-type MOSFET having a structure shown in Figs. 6 and 7 was used as the MOSFET in Example 11.

Example 14

An ISFET sensor for measuring potassium ion concentration was fabricated as in Example 11 except for

the fact that a potassium ion carrier composition, described below, was used instead of the hydrogen ion carrier composition in Example 11 and the redox layer was coated with a potassium ion-selective layer (thickness: 0.4 mm)

(Potassium ion carrier composition)

| | |
|---|---|
| valinomycin | 3.2 mg/ml |
| PVC | 65.6 mg/ml |
| DOS | 131.2 mg/ml |
| solvent: THF | |

Experiment 11

The characteristics of the pH measuring ISFET sensor fabricated in Example 11 were investigated by measuring the sensor source voltage (Vout) with respect to SSCE using the measurement circuit and apparatus shown in Fig. 6. For the measurement of Vout, a digital voltmeter (TR6841, Advantest Corporation) was used. In addition, a 50 mM phosphate buffer solution was used as the liquid specimen. Measurement was taken over a pH range of 5 - 9 ($37^{o}C$) in the atmosphere and under constant illumination while the liquid specimen was stirred.

As shown in Fig. 9, the response characteristic with respect to pH exhibited a linear relationship in accordance with a Nernst equation expressed by $E=E^{o}-S$ pH (where E stands for electromotive force, $E^{o}$ for constant potential and S for slope). It was found that S = 61 mV/pH ($37^{o}C$), and a value close to the theoretical value was obtained. Also, it was clarified that 99% response was within 5 sec, which is a very rapid

response, that Vout is constant within an experimental error of ±1 mV, even when the degree of illumination was varied over a range of from 0 to 10,000 lux, and that the sensor is little influenced by light.

Further, the stability of this pH sensor with the passage of time was investigated by repeating the above-described measurement over a period of 40 days. The sensor of the present embodiment was stable and did not exhibit any change in sensor characteristics over a period of more than one month.

Experiment 12

The ISFETs obtained in Examples 12 and 13 were submitted to measurements similar to those performed in Experiment 11. The results were similar to those obtained in Experiment 11.

Experiment 13

The response characteristics of the ISFET for potassium ion concentration measurement obtained in Example 14 were investigated in the manner set forth in Experiment 11.

As shown in Fig. 10, the logarithmic value of Vout and potassium ion concentration exhibited good linearity in the range $10^{-4}$ - 5 x $10^{-1}$M, and the slope of the straight line was 60 mV/log[$k^+$]. It was found that the speed of response was very high, being within one second at a response of 95%, that there was very little change with a change in degree of illumination, and that characteristics were stable for over one month.

Examples 15 - 18, and Experiments 15 - 18

ISFETs for measuring pH were fabricated as in Example 11 except for the fact that platinum, palladium, indium oxide and silver were used instead of iridium oxide as the electrically conductive layer in Example 11. Upon taking measurements as in Experiment 11, results similar to those of Experiment 11 were obtained.

CLAIMS:

1. An ion-selective FET sensor characterized by comprising:

a MOSFET;

an electrical conductor layer covering a surface of a gate isolating layer of said MOSFET;

a redox layer having a redox function covering a surface of said electrical conductor layer; and

an ion-selective layer exhibiting ion selectiving covering a surface of said redox layer.

2. An ion-selective FET sensor according to claim 1, characterized in that the electrical conductor layer is a metallic oxide such as iridum oxide or indium oxide.

3. An ion-selective FET sensor according to claim 1, characterized in that the electrical conductor layer is a metal such as platinum, silver or palladium.

4. An ion-selective FET sensor according to claim 1, characterized in that the electrical conductor layer is an electrically conductive carbon layer having a graphite-type crystal structure.

5. An ion-selective FET sensor according to claim 1, characterized in that the ion-selective layer is a polymeric membrane which carries an ion carrier substance.

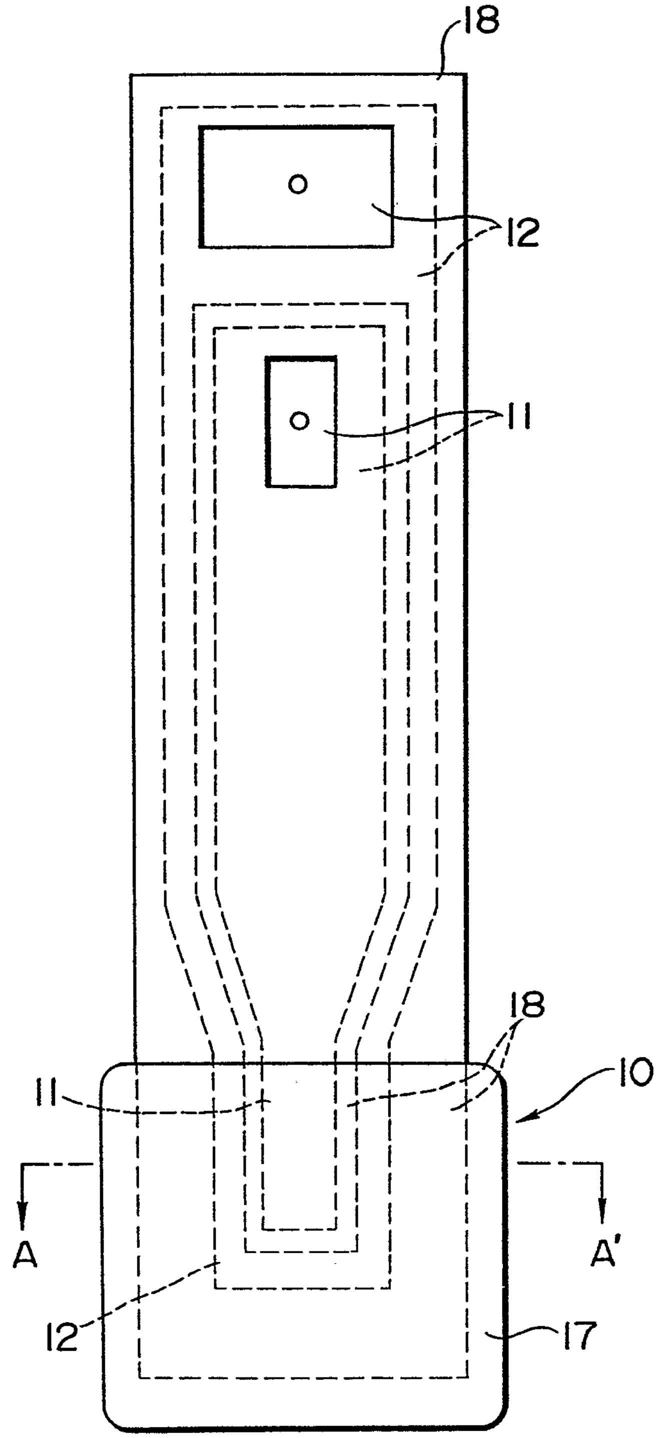


FIG. 1

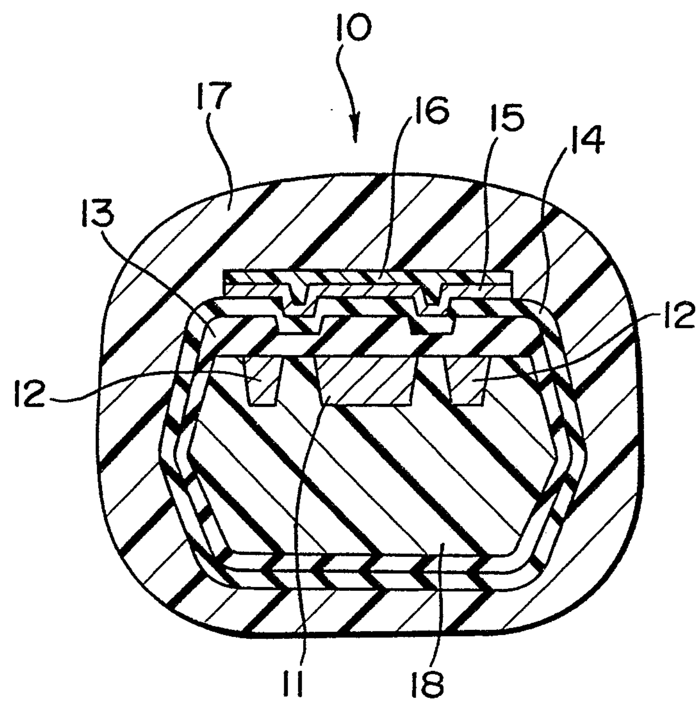


FIG. 2

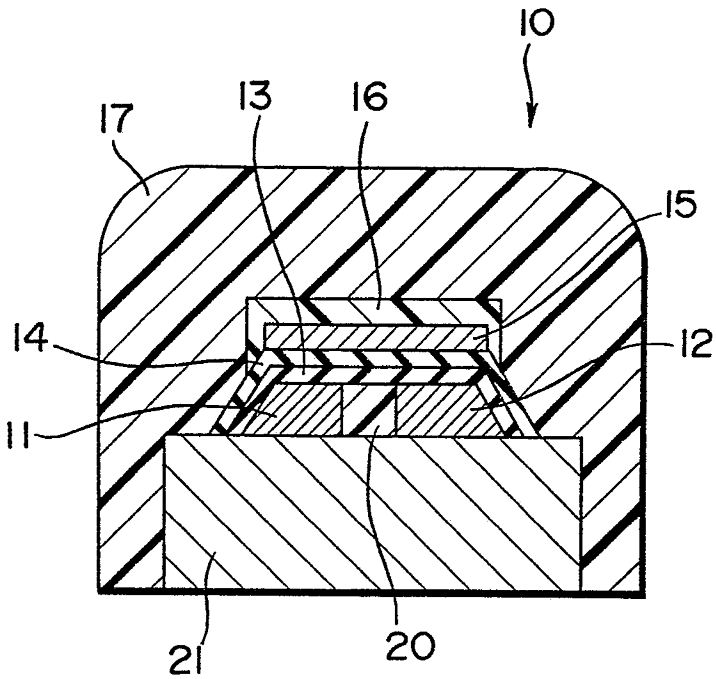


F I G. 3

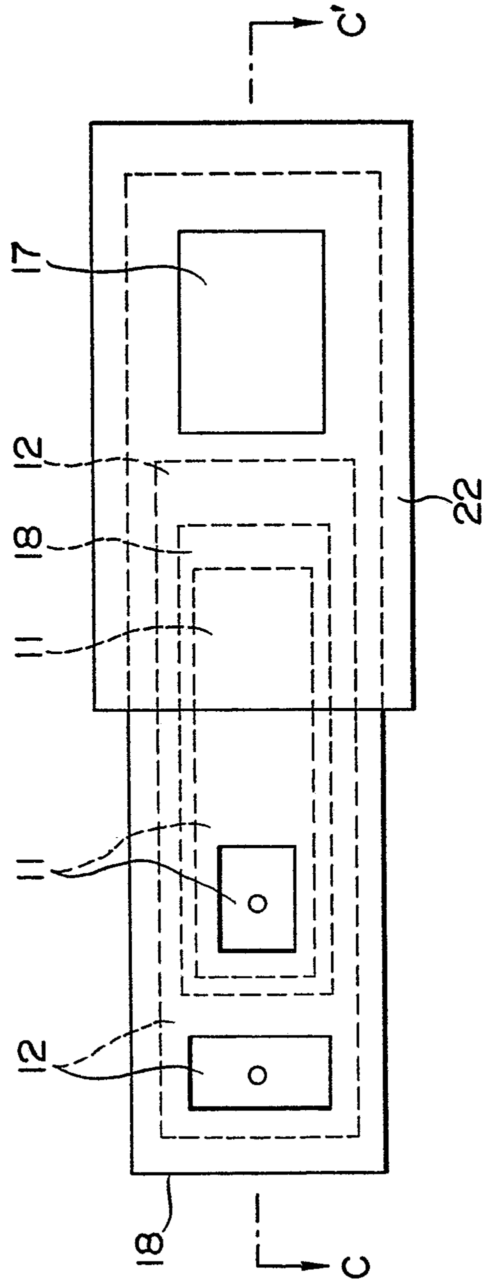


FIG. 4

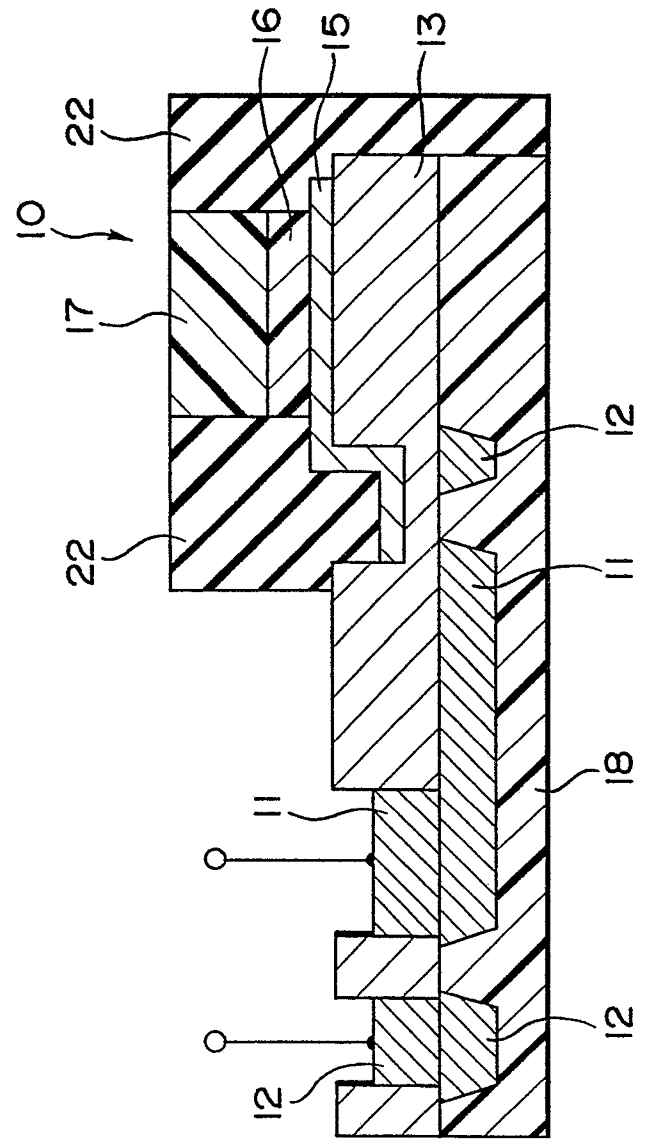


FIG. 5

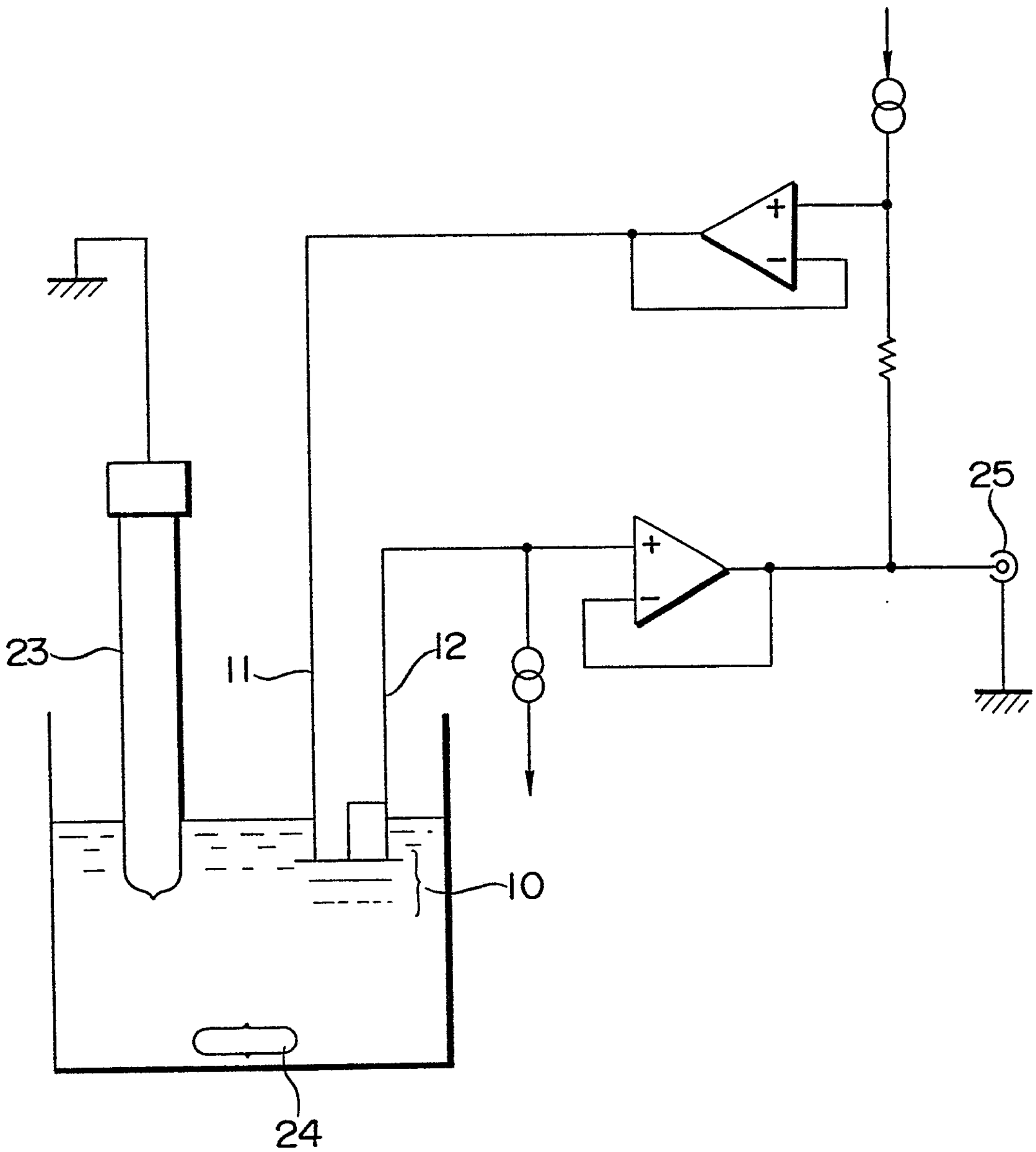


F I G. 6

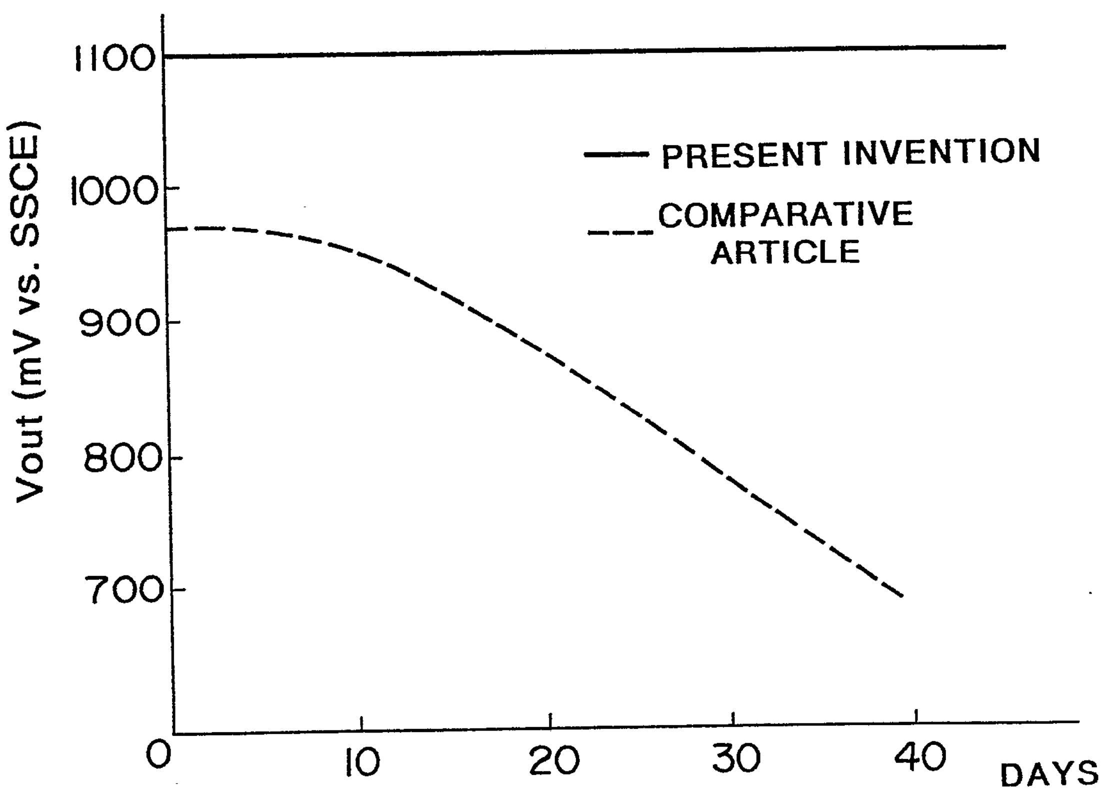
1100
1000
900
800
700
Vout (mV vs. SSCE)
PRESENT INVENTION
COMPARATIVE
ARTICLE
0
10
20
30
40
DAYS

F I G. 7

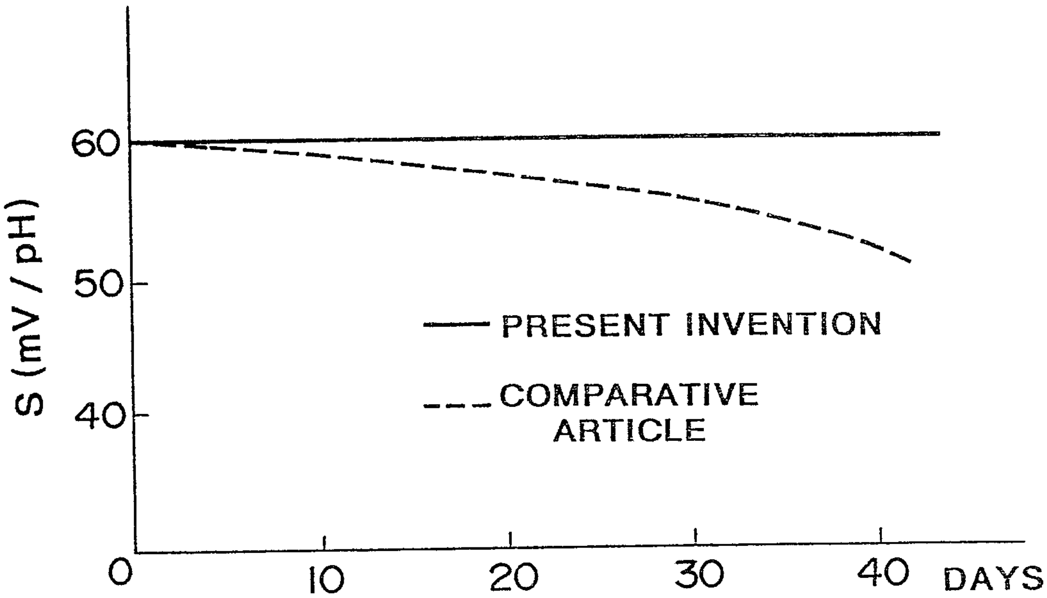
S (mV / pH)
60
50
40
0
10
20
30
40
DAYS
PRESENT INVENTION
COMPARATIVE
ARTICLE

F I G. 8

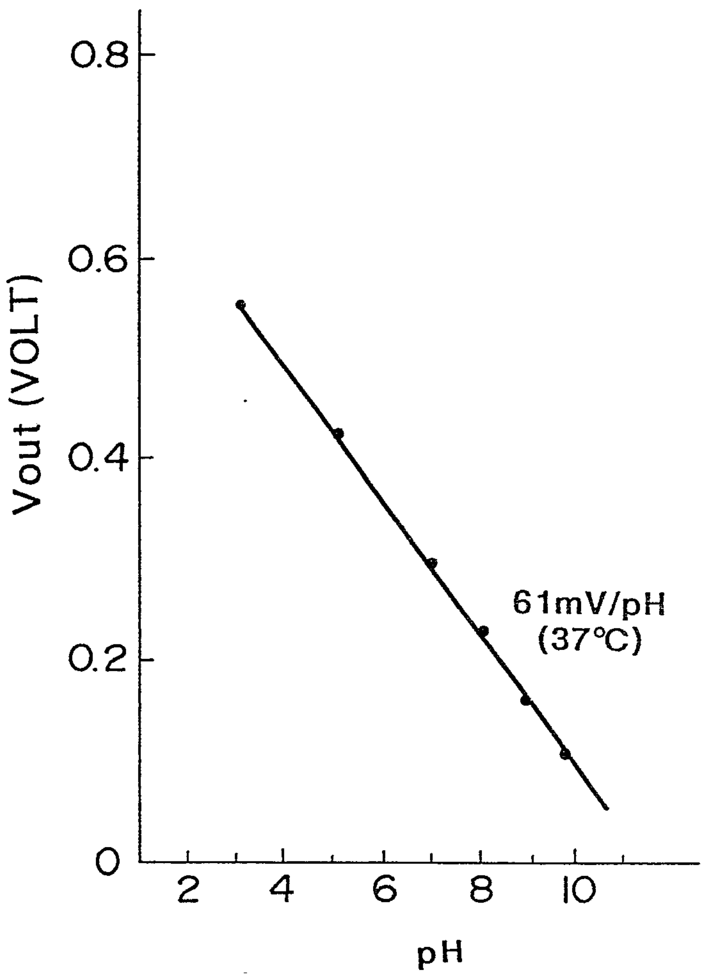


F I G. 9

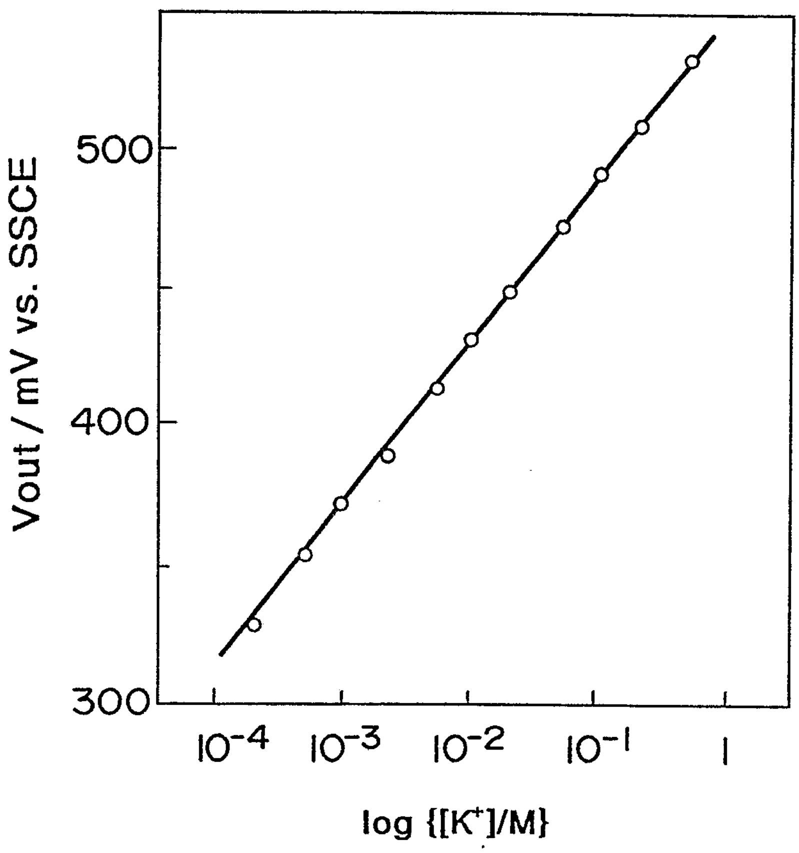


F I G. 10

# INTERNATIONAL SEARCH REPORT

International Application No PCT/JP87/00951

**I. CLASSIFICATION OF SUBJECT MATTER** (if several classification symbols apply, indicate all) [3]

According to International Patent Classification (IPC) or to both National Classification and IPC

Int.Cl$^4$ G01N27/30

**II. FIELDS SEARCHED**

Minimum Documentation Searched [4]

| Classification System | Classification Symbols |
|---|---|
| IPC | G01N27/30, G01N27/00 |

Documentation Searched other than Minimum Documentation to the Extent that such Documents are Included in the Fields Searched [5]

| | |
|---|---|
| Jitsuyo Shinan Koho | 1926 - 1987 |
| Kokai Jitsuyo Shinan Koho | 1971 - 1987 |

**III. DOCUMENTS CONSIDERED TO BE RELEVANT** [14]

| Category * | Citation of Document, [16] with indication, where appropriate, of the relevant passages [17] | Relevant to Claim No. [18] |
|---|---|---|
| Y | JP, A, 59-176662 (Sumitomo Electric Industries, Ltd.) 6 October 1984 (06. 10. 84) (Family: none) | 1-5 |
| Y | JP, A, 60-73351 (Hitachi, Ltd.) 25 April 1985 (25. 04. 85) (Family: none) | 1-5 |
| Y | JP, A, 61-155949 (Terumo Kabushiki Kaisha) 15 July 1986 (15. 07. 86) (Family: none) | 1-5 |
| Y | JP, A, 61-266952 (Terumo Kabushiki Kaisha) 26 November 1986 (26. 11. 86) (Family: none) | 1-5 |

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search [2] | Date of Mailing of this International Search Report [2] |
|---|---|
| February 8, 1988 (08.02.88) | March 7, 1988 (07.03.88) |
| **International Searching Authority** [1] | **Signature of Authorized Officer** [20] |
| Japanese Patent Office | |